# EUROPEAN PATENT APPLICATION

(11) **EP 4 557 846 A1**
(43) Date of publication of application: **21.05.2025**
(21) Application number: 23889197.2
(22) Date of filing: 10.11.2023
(51) Int. Cl.: H04W 56/00, H04W 76/15, H04W 84/12

(54) **METHOD AND DEVICE FOR MEDIUM ACCESS IN MULTI-LINK SYNCHRONIZATION TRANSMISSION**

(30) Priority: 10.11.2022 KR 20220149403
(71) Applicant: Hyundai Motor Company, Seoul 06797 (KR); Kia Corporation, Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 21562 (KR); MOON, Ju Seong, Osan-si, Gyeonggi-do 18101 (KR)
(74) Representative: Isarpatent
(86) International application number: PCT/KR2023/018040
(87) International publication number: WO 2024/101941

(57) **Abstract**

A method and a device for medium access in multi-link synchronization transmission are disclosed. This method of a STA MLD comprises the steps of: performing a first backoff operation in a first link; maintaining, as 0, a backoff counter value for the first backoff operation for multi-link synchronization transmission in the first link and a second link if the first backoff operation is completed; performing a second backoff operation in the second link; and performing the multi-link synchronization transmission in the first link and the second link if the second backoff operation is completed.

## Description

### [Technical Field]

The present disclosure relates to a wireless local area network (LAN) communication technique, and more particularly, to a technique for accessing a medium in multi-link synchronized transmission.

### [Background Art]

Recently, as the spread of mobile devices expands, a wireless local area network technology capable of providing fast wireless communication services to mobile devices is in the spotlight. The wireless LAN technology may be a technology that supports mobile devices such as smart phones, smart pads, laptop computers, portable multimedia players, embedded devices, and the like to wirelessly access the Internet based on wireless communication technology.

The standards that use wireless LAN technology are mainly developed as the Institute of Electrical and Electronics Engineers (IEEE) 802.11 standards. As the aforementioned wireless LAN technology has been developed and widely adopted, applications utilizing wireless LAN technology have diversified, and demand has arisen for wireless LAN technology that supports a higher throughput.

As applications requiring higher throughput and applications requiring real-time transmission occur, a wireless LAN can support communication using an expanded frequency bandwidth and efficient retransmission operations. Additionally, a wireless LAN can support operations that use multiple channels or multiple links simultaneously. In other words, a wireless LAN can support multi-link transmission. In this case, methods to support efficient multi-link transmission may be required.

Meanwhile, the technologies that are the background of the present disclosure are written to improve the understanding of the background of the present disclosure and may include content that is not already known to those of ordinary skill in the art to which the present disclosure belongs.

### [Disclosure]

### [Technical Problem]

The present disclosure is directed to providing a method and an apparatus for accessing a medium in multi-link synchronized transmission.

### [Technical Solution]

A method of a station (STA) multi-link device (MLD), according to exemplary embodiments of the present disclosure for achieving the above-described objective, may comprise: performing a first backoff operation on a first link; in response to completion of the first backoff operation, maintaining a backoff counter value for the first backoff operation at 0 for multi-link synchronized transmission on the first link and a second link; performing a second backoff operation on the second link; and in response to completion of the second backoff operation, performing the multi-link synchronized transmission on the first link and the second link, wherein when the multi-link synchronized transmission is performed, a transmission start time of a first frame on the first link may be equal to a transmission start time of a second frame on the second link.

When the second backoff operation is completed and a channel state of the first link is an idle state, the multi-link synchronized transmission may be performed, and when the second backoff operation is completed and the channel state of the first link is a busy state, the multi-link synchronized transmission may not be performed.

The STA MLD may be a non-simultaneous transmit and receive (NSTR) STA MLD that is not capable of STR operations, and the first link and the second link may be NSTR links.

When first channel access parameters configured for the first backoff operation are different from second channel access parameters configured for the second backoff operation, the first backoff operation and the second backoff operation for the multi-link synchronized transmission may be performed using same channel access parameters, the same channel access parameters may be the first channel access parameters or the second channel access parameters, and the same channel access parameters may include at least one of a contention window (CW) per access category (AC) or a quality of service (QoS) short retry counter (QSRC) per AC.

When the first backoff operation for each of a plurality of data units having different ACs is completed on the first link, the multi-link synchronized transmission for a first data unit among the plurality of data units may be performed.

The method may further comprise: performing a third backoff operation for a second data unit among the plurality of data units on the first link; and in response to the third backoff operation being successful, transmitting the second data unit on the first link.

The third backoff operation may be performed after a time when a channel state of the first link transitions from an idle state to a busy state, after a time when the channel state of the first link transitions from a busy state to an idle state, or after a predefined time from a time when the channel state of the first link is detected as a busy state.

First channel access parameters used for the first backoff operation on the first link may be equal to third channel access parameters used for the third backoff operation on the first link.

First channel access parameters used for the first backoff operation on the first link may be different from third channel access parameters used for the third backoff operation on the first link, and a CW among the third backoff parameters may be an n-multiple or 1/n of a CW among the first backoff parameters, n being a natural number.

First channel access parameters used for the first backoff operation on the first link may be different from third channel access parameters used for the third backoff operation on the first link, and a QSRC among the third backoff parameters may be greater or smaller than a QSRC among the first backoff parameters by m, m being a natural number.

A station (STA) multi-link device (MLD), according to exemplary embodiments of the present disclosure for achieving the above-described objective, may comprise at least one processor, wherein the at least one processor causes the STA MLD to perform: performing a first backoff operation on a first link; in response to completion of the first backoff operation, maintaining a backoff counter value for the first backoff operation at 0 for multi-link synchronized transmission on the first link and a second link; performing a second backoff operation on the second link; and in response to completion of the second backoff operation, performing the multi-link synchronized transmission on the first link and the second link, wherein when the multi-link synchronized transmission is performed, a transmission start time of a first frame on the first link may be equal to a transmission start time of a second frame on the second link.

When the second backoff operation is completed and a channel state of the first link is an idle state, the multi-link synchronized transmission may be performed, and when the second backoff operation is completed and the channel state of the first link is a busy state, the multi-link synchronized transmission may not be performed.

The STA MLD may be a non-simultaneous transmit and receive (NSTR) STA MLD that is not capable of STR operations, and the first link and the second link may be NSTR links.

When first channel access parameters configured for the first backoff operation are different from second channel access parameters configured for the second backoff operation, the first backoff operation and the second backoff operation for the multi-link synchronized transmission may be performed using same channel access parameters, the same channel access parameters may be the first channel access parameters or the second channel access parameters, and the same channel access parameters may include at least one of a contention window (CW) per access category (AC) or a quality of service (QoS) short retry counter (QSRC) per AC.

When the first backoff operation for each of a plurality of data units having different ACs is completed on the first link, the multi-link synchronized transmission for a first data unit among the plurality of data units may be performed.

The at least one processor may further cause the STA MLD to perform: performing a third backoff operation for a second data unit among the plurality of data units on the first link; and in response to the third backoff operation being successful, transmitting the second data unit on the first link.

The third backoff operation may be performed after a time when a channel state of the first link transitions from an idle state to a busy state, after a time when the channel state of the first link transitions from a busy state to an idle state, or after a predefined time from a time when the channel state of the first link is detected as a busy state.

First channel access parameters used for the first backoff operation on the first link may be equal to third channel access parameters used for the third backoff operation on the first link.

First channel access parameters used for the first backoff operation on the first link may be different from third channel access parameters used for the third backoff operation on the first link, and a CW among the third backoff parameters may be an n-multiple or 1/n of a CW among the first backoff parameters, n being a natural number.

First channel access parameters used for the first backoff operation on the first link may be different from third channel access parameters used for the third backoff operation on the first link, and a QSRC among the third backoff parameters may be greater or smaller than a QSRC among the first backoff parameters by m, m being a natural number.

### [Advantageous Effects]

According to the present disclosure, a communication node in a wireless LAN may perform multi-link synchronized transmission. The communication node may include a STA, STA MLD, AP, and/or AP MLD. When multi-link synchronized transmission is supported, start times (e.g., transmission start times) of frames on multiple links can be synchronized. Depending on a change in a channel state, multi-link synchronized transmission may not be possible. If multi-link synchronized transmission is not possible, backoff operation(s) can be performed to prevent a collision between communication nodes and/or an internal collision within a communication node. In this case, the collisions in multi-link synchronized transmission can be avoided, and multi-link synchronized transmission can be performed reliably.

### [Description of Drawings]

FIG. 1 is a block diagram illustrating a first exemplary embodiment of a communication node constituting a wireless LAN system.
FIG. 2 is a conceptual diagram illustrating a first exemplary embodiment of a multi-link configured between multi-link devices (MLDs).
FIG. 3A is a timing diagram illustrating a first exemplary embodiment of a backoff operation method when multi-link synchronized transmission is not possible.
FIG. 3B is a timing diagram illustrating a second exemplary embodiment of a backoff operation method when multi-link synchronized transmission is not possible.
FIG. 4A is a timing diagram illustrating a third exemplary embodiment of a backoff operation method when multi-link synchronized transmission is not possible.
FIG. 4B is a timing diagram illustrating a fourth exemplary embodiment of a backoff operation method when multi-link synchronized transmission is not possible.
FIG. 5 is a timing diagram illustrating a fifth exemplary embodiment of a backoff operation method when multi-link synchronized transmission is not possible.
FIG. 6 is a timing diagram illustrating a first exemplary embodiment of a method for determining parameters for channel access operations in multi-link synchronized transmission.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

In the following, a wireless communication system to which exemplary embodiments according to the present disclosure are applied will be described. The wireless communication system to which the exemplary embodiments according to the present disclosure are applied is not limited to the contents described below, and the exemplary embodiments according to the present disclosure can be applied to various wireless communication systems. A wireless communication system may be referred to as a 'wireless communication network'.

In exemplary embodiments, 'configuration of an operation (e.g., transmission operation)' may mean that 'configuration information (e.g., information element(s), parameter(s)) for the operation' and/or 'information indicating to perform the operation' is signaled. 'Configuration of an information element (e.g., parameter)' may mean that the information element is signaled. 'Configuration of a resource (e.g., resource region)' may mean that setting information of the resource is signaled. A transmission time of a frame may refer to a transmission start time or a transmission end time, and a reception time of a frame may refer to a reception start time or a reception end time. A transmission time may be interpreted as corresponding to a reception time. A time point may be interpreted as a time, and a time may be interpreted as a time point.

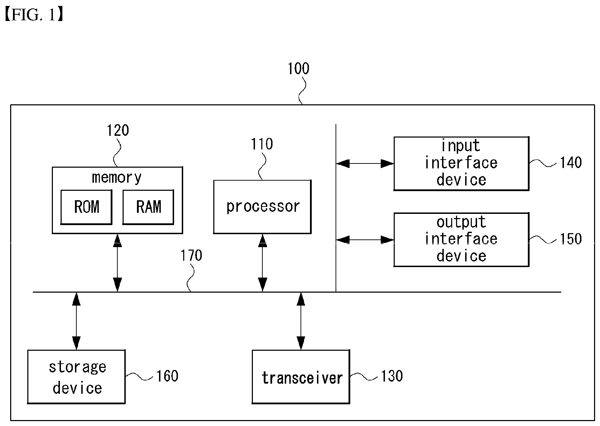

FIG. 1 is a block diagram illustrating a first exemplary embodiment of a communication node constituting a wireless LAN system.

As shown in FIG. 1, a communication node 100 may be an access point, a station, an access point (AP) multi-link device (MLD), or a non-AP MLD. An access point may refer to 'AP', and a station may refer to 'STA' or 'non-AP STA'. An operating channel width supported by an AP may be 20 megahertz (MHz), 80MHz, 160MHz, or the like. An operating channel width supported by a STA may be 20MHz, 80MHz, or the like.

The communication node 100 may include at least one processor 110, a memory 120, and a transceiver 130 connected to a network to perform communications. The transceiver 130 may be referred to as a transceiver, a radio frequency (RF) unit, an RF module, or the like. In addition, the communication node 100 may further include an input interface device 140, an output interface device 150, a storage device 160, and the like. The respective components included in the communication node 100 may be connected by a bus 170 to communicate with each other.

However, the respective components included in the communication node 100 may be connected through individual interfaces or individual buses centering on the processor 110 instead of the common bus 170. For example, the processor 110 may be connected to at least one of the memory 120, the transceiver 130, the input interface device 140, the output interface device 150, and the storage device 160 through a dedicated interface.

The processor 110 may execute program commands stored in at least one of the memory 120 and the storage device 160. The processor 110 may refer to a central processing unit (CPU), a graphics processing unit (GPU), or a dedicated processor on which the methods according to the exemplary embodiments of the present disclosure are performed. Each of the memory 120 and the storage device 160 may be configured as at least one of a volatile storage medium and a nonvolatile storage medium. For example, the memory 120 may be configured with at least one of a read only memory (ROM) and a random access memory (RAM).

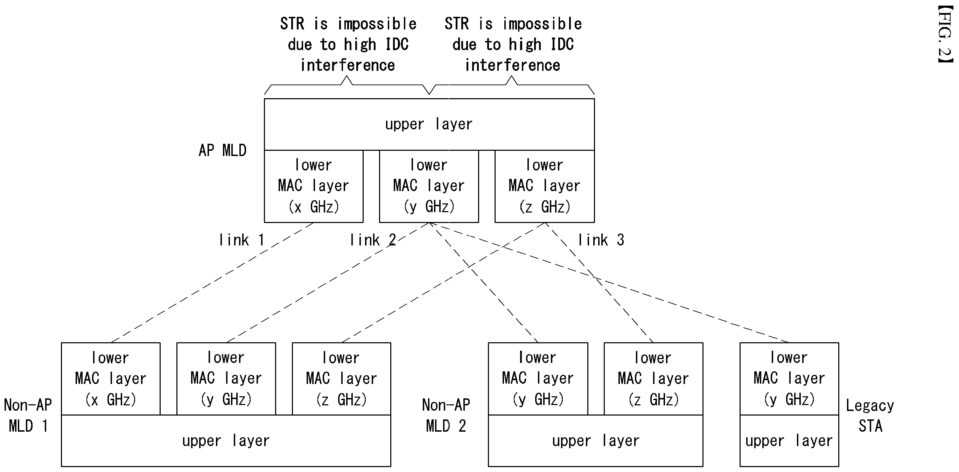

FIG. 2 is a conceptual diagram illustrating a first exemplary embodiment of a multi-link configured between multi-link devices (MLDs).

As shown in FIG. 2, an MLD may have one medium access control (MAC) address. In exemplary embodiments, the MLD may mean an AP MLD and/or non-AP MLD. The MAC address of the MLD may be used in a multi-link setup procedure between the non-AP MLD and the AP MLD. The MAC address of the AP MLD may be different from the MAC address of the non-AP MLD. AP(s) affiliated with the AP MLD may have different MAC addresses, and station(s) affiliated with the non-AP MLD may have different MAC addresses. Each of the APs having different MAC addresses within the AP MLD may be in charge of each link, and may perform a role of an independent AP.

Each of the STAs having different MAC addresses within the non-AP MLD may be in charge of each link, and may perform a role of an independent STA. The non-AP MLD may be referred to as a STA MLD. The MLD may support a simultaneous transmit and receive (STR) operation. In this case, the MLD may perform a transmission operation in a link 1 and may perform a reception operation in a link 2. The MLD supporting the STR operation may be referred to as an STR MLD (e.g., STR AP MLD, STR non-AP MLD). In exemplary embodiments, a link may mean a channel or a band. A device that does not support the STR operation may be referred to as a non-STR (NSTR) AP MLD or an NSTR non-AP MLD (or NSTR STA MLD).

The MLD may transmit and receive frames in multiple links by using a non-contiguous bandwidth extension scheme (e.g., 80 MHz + 80 MHz). The multi-link operation may include multi-band transmission. The AP MLD may include a plurality of APs, and the plurality of APs may operate in different links. Each of the plurality of APs may perform function(s) of a lower MAC layer. Each of the plurality of APs may be referred to as a 'communication node' or 'lower entity'. The communication node (i.e., AP) may operate under control of an upper layer (or the processor 110 shown in FIG. 1). The non-AP MLD may include a plurality of STAs, and the plurality of STAs may operate in different links. Each of the plurality of STAs may be referred to as a 'communication node' or 'lower entity'. The communication node (i.e., STA) may operate under control of an upper layer (or the processor 110 shown in FIG. 1).

The MLD may perform communications in multiple bands (i.e., multi-band). For example, the MLD may perform communications using an 80 MHz bandwidth according to a channel expansion scheme (e.g., bandwidth expansion scheme) in a 2.4 GHz band, and perform communications using a 160 MHz bandwidth according to a channel expansion scheme in a 5 GHz band. The MLD may perform communications using a 160 MHz bandwidth in the 5 GHz band, and may perform communications using a 160 MHz bandwidth in a 6 GHz band. One frequency band (e.g., one channel) used by the MLD may be defined as one link. Alternatively, a plurality of links may be configured in one frequency band used by the MLD. For example, the MLD may configure one link in the 2.4 GHz band and two links in the 6 GHz band. The respective links may be referred to as a first link, a second link, and a third link. Alternatively, each link may be referred to as a link 1, a link 2, a link 3, or the like. A link number may be set by an access point, and an identifier (ID) may be assigned to each link.

The MLD (e.g., AP MLD and/or non-AP MLD) may configure a multi-link by performing an access procedure and/or a negotiation procedure for a multi-link operation. In this case, the number of links and/or link(s) to be used in the multi-link may be configured. The non-AP MLD (e.g., STA) may identify information on band(s) capable of communicating with the AP MLD. In the negotiation procedure for a multi-link operation between the non-AP MLD and the AP MLD, the non-AP MLD may configure one or more links among links supported by the AP MLD to be used for the multi-link operation. A station that does not support a multi-link operation (e.g., IEEE 802.11a/b/g/n/ac/ax STA) may be connected to one or more links of the multi-link supported by the AP MLD.

When a band separation between multiple links (e.g., a band separation between a link 1 and a link 2 in the frequency domain) is sufficient, the MLD may be able to perform an STR operation. For example, the MLD may transmit a physical layer protocol data unit (PPDU) 1 using the link 1 among multiple links, and may receive a PPDU 2 using the link 2 among multiple links. On the other hand, if the MLD performs an STR operation when the band separation between multiple links is not sufficient, in-device coexistence (IDC) interference, which is interference between the multiple links, may occur. Accordingly, when the bandwidth separation between multiple links is not sufficient, the MLD may not be able to perform an STR operation. A link pair having the above-described interference relationship may be a non-simultaneous transmit and receive (NSTR)-limited link pair. Here, the MLD may be referred to as 'NSTR AP MLD' or 'NSTR non-AP MLD'.

For example, a multi-link including a link 1, a link 2, and a link 3 may be configured between an AP MLD and a non-AP MLD 1. When a band separation between the link 1 and the link 3 is sufficient, the AP MLD may perform an STR operation using the link 1 and the link 3. That is, the AP MLD may transmit a frame using the link 1 and receive a frame using the link 3. When a band separation between the link 1 and the link 2 is insufficient, the AP MLD may not be able to perform an STR operation using the link 1 and the link 2. When a band separation between the link 2 and the link 3 is not sufficient, the AP MLD may not be able to perform an STR operation using the link 2 and the link 3.

Meanwhile, in a wireless LAN system, a negotiation procedure for a multi-link operation may be performed in an access procedure between a station and an access point. A device (e.g., access point, station) that supports multiple links may be referred to as 'multi-link device (MLD)'. An access point supporting multiple links may be referred to as 'AP MLD', and a station supporting multiple links may be referred to as 'non-AP MLD' or 'STA MLD'. The AP MLD may have a physical address (e.g., MAC address) for each link. The AP MLD may be implemented as if an AP in charge of each link exists separately. A plurality of APs may be managed within one AP MLD. Therefore, coordination between a plurality of APs belonging to the same AP MLD may be possible. A STA MLD may have a physical address (e.g., MAC address) for each link. The STA MLD may be implemented as if a STA in charge of each link exists separately. A plurality of STAs may be managed within one STA MLD. Therefore, coordination between a plurality of STAs belonging to the same STA MLD may be possible.

For example, an AP1 of the AP MLD and a STA1 of the STA MLD may each be responsible for a first link and perform communication using the first link. An AP2 of the AP MLD and a STA2 of the STA MLD may each be responsible for a second link and perform communication using the second link. The STA2 may receive status change information for the first link on the second link. In this case, the STA MLD may collect information (e.g., status change information) received on the respective links, and control operations performed by the STA1 based on the collected information.

Hereinafter, data transmission and reception methods in a wireless LAN system will be described. Even when a method (e.g., transmission or reception of a signal) performed at a first communication node among communication nodes is described, a corresponding second communication node may perform a method (e.g., reception or transmission of the signal) corresponding to the method performed at the first communication node. That is, when an operation of a STA is described, an AP corresponding thereto may perform an operation corresponding to the operation of the STA. Conversely, when an operation of an AP is described, a STA corresponding thereto may perform an operation corresponding to the operation of the AP.

In the present disclosure, operations of a STA may be interpreted as operations of a STA MLD, operations of a STA MLD may be interpreted as operations of a STA, operations of an AP may be interpreted as operations of an AP MLD, and operations of an AP MLD may be interpreted as operations of an AP. A STA of a STA MLD may refer to a STA affiliated with the STA MLD, and an AP of an AP MLD may refer to an AP affiliated with the AP MLD. When a STA MLD includes a first STA operating on a first link and a second STA operating on a second link, operations of the STA MLD on the first link may be interpreted as operations of the first STA, and operations of the STA MLD on the second link may be interpreted as operations of the second STA. When an AP MLD includes a first AP operating on the first link and a second AP operating on the second link, operations of the AP MLD on the first link may be interpreted as operations of the first AP, and operations of the AP MLD on the second link may be interpreted as operations of the second AP.

A communication node (e.g., AP, AP MLD, STA, or STA MLD) may perform multi-link synchronized transmission. In multi-link synchronized transmission, transmission operations may be performed on multiple links, and start times of the transmission operations on the multiple links may be synchronized. Additionally, end times of the transmission operations on the multiple links may be synchronized. In other words, when multi-link synchronized transmission is performed, at least one of the start times or the end times of the transmission operations on the multiple links may be synchronized.

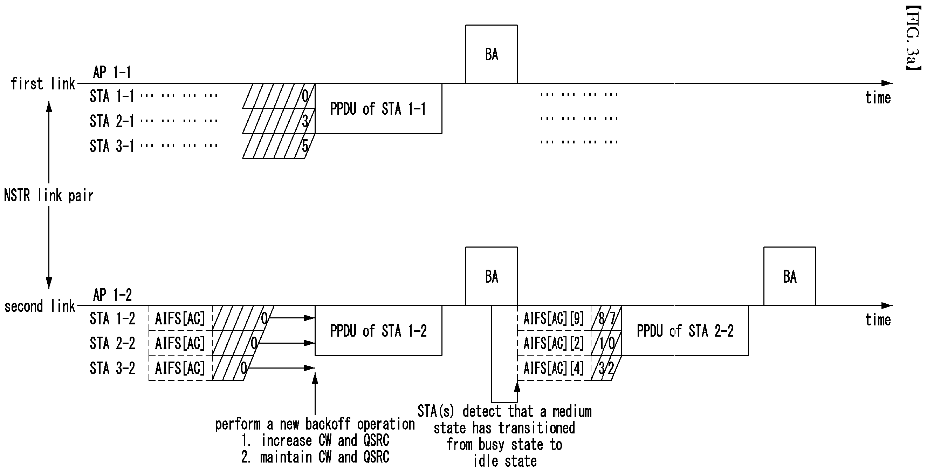

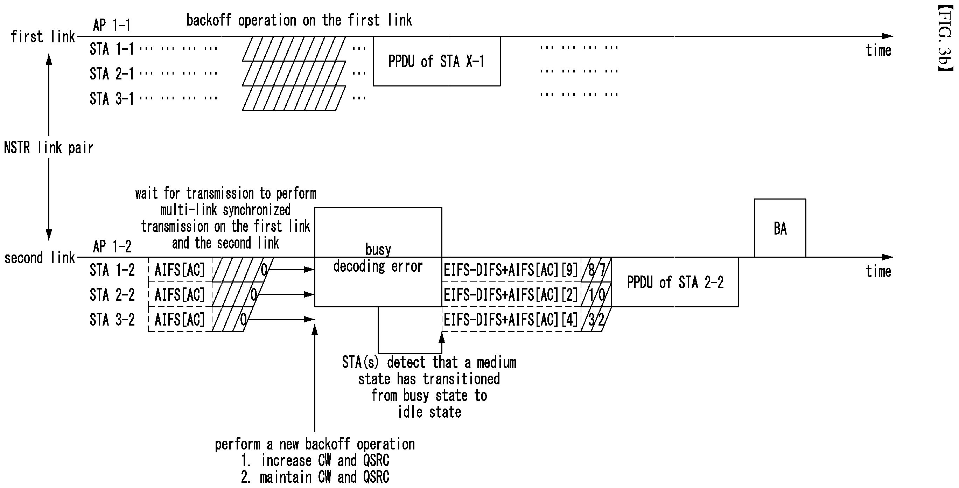

FIG. 3A is a timing diagram illustrating a first exemplary embodiment of a backoff operation method when multi-link synchronized transmission is not possible, and FIG. 3B is a timing diagram illustrating a second exemplary embodiment of a backoff operation method when multi-link synchronized transmission is not possible.

As shown in FIGS. 3A and 3B, an AP MLD 1, STA MLD 1, STA MLD 2, and STA MLD 3 may operate on a first link and a second link. The AP MLD 1 may be a simultaneous transmit and receive (STR) AP MLD capable of performing STR operations. Each of the STA MLD 1, STA MLD 2, and STA MLD 3 may be a non-STR (NSTR) STA MLD that is not capable of performing STR operations. The first link and the second link may be an NSTR link pair for each of the STA MLDs.

A STA affiliated with a STA MLD N operating on a link X may be referred to as a STA N-X. An AP affiliated with an AP MLD N operating on the link X may be referred to as an AP N-X. Each of X and N may be a natural number. For example, an AP affiliated with the AP MLD 1 operating on the first link may be referred to as an AP 1-1, and an AP affiliated with the AP MLD 1 operating on the second link may be referred to as an AP 1-2. A STA affiliated with the STA MLD 1 operating on the first link may be referred to as a STA 1-1, and a STA affiliated with the STA MLD 1 operating on the second link may be referred to as a STA 1-2.

STAs affiliated with a STA MLD may perform backoff operations to perform multi-link synchronized transmission on the first link and the second link. The multi-link synchronized transmission may be performed when the backoff operations are successfully completed on all the multiple links (e.g., the first link and the second link). The multi-link synchronized transmission may mean that frames are transmitted at the same start time on the multiple links. In multi-link synchronized transmission, differences between start times of the frames may be within a predetermined time (e.g., aRxTxTurnAroundTime). The aRxTxTurnAroundTime may be 4 µs. The backoff operation may refer to an enhanced distributed channel access function (EDCAF) backoff operation for each access category (AC). In the present disclosure, the EDCAF backoff operation for each AC may be referred to as an 'AC EDCAF backoff operation'. In the present disclosure, the backoff operation may be interpreted as an AC EDCAF backoff operation based on a context. The AC EDCAF backoff operation may start when an EDCA backoff is invoked. In other words, the AC EDCAF backoff operation may be performed when an EDCA backoff is invoked. A backoff counter required for the backoff operation may be an EDCA backoff counter maintained by an EDCAF for each AC. The backoff counter for the AC EDCAF backoff operation may be referred to as an EDCAF backoff counter or EDCA backoff counter. Each of the STA MLDs may perform multiple AC EDCAF backoff operations. Each of the STA MLDs may perform AC EDCAF backoff operation(s) for the same AC and/or different ACs.

The STA N-2 of the STA MLD N may perform a backoff operation on the second link, and the backoff operation may be completed. The completion of the backoff operation may indicate success of the backoff operation. When the backoff counter value is 0, the backoff operation associated with the backoff counter value may be completed. The STA N-2 of the STA MLD N operating on the second link may wait for the STA N-1 of the STA MLD N operating on the first link to acquire a transmit opportunity (TXOP) (e.g., EDCA TXOP). In the present disclosure, a TXOP may refer to an EDCA TXOP. The TXOP may be acquired at a slot (e.g., slot boundary) in which the EDCAF backoff counter of the STA reaches 0. The acquisition of the TXOP (e.g., EDCA TXOP) by the STA may mean acquisition of the TXOP (e.g., EDCA TXOP) by the EDCAF of each AC.

In the exemplary embodiment of FIG. 3A, the STA 1-2, STA 2-2, and/or STA 3-2 may perform backoff operations on the second link. When the backoff operation is completed (e.g., the backoff operation is successful), the backoff counter value for the backoff operation may be 0. The backoff counter values of the STA 1-2, STA 2-2, and/or STA 3-2 may be maintained at 0 to perform multi-link synchronized transmission on the first link and the second link. On the first link, the STA 1-1 of the STA MLD 1 may acquire a TXOP. A frame may be transmitted within the TXOP. In the present disclosure, a frame may refer to a physical layer protocol data unit (PPDU), MAC layer protocol data unit (MPDU), and/or aggregated (A)-MPDU.

When the STA 1-1 of the STA MLD 1 acquires a TXOP on the first link, and the backoff counter value of the STA 1-2 of the STA MLD 1 on the second link is 0, the STA 1-1 and STA 1-2 affiliated with the STA MLD 1 may perform multi-link synchronized transmission. In this case, a start time of frame transmission by the STA 1-1 may be the same as a start time of frame transmission by the STA 1-2. In other words, the start time of frame transmission by the STA 1-1 may be synchronized with the start time of frame transmission by the STA 1-2.

When the backoff operation of each of the STA 1-2, STA 2-2, and STA 3-2 is completed on the second link, and the STA 1-2 transmits a frame, the STA 2-2 and STA 3-2 may not transmit frames on the second link. In other words, since the STA 1-2 transmits the frame on the second link, each of the STA 2-2 and STA 3-2 may determine that a channel state (e.g., medium state) of the second link is a busy state, and may not be able to transmit frames on the second link in the busy state. When the channel state (e.g., medium state) of the second link transitions from the busy state to an idle state, each of the STA 2-2 and STA 3-2 may wait for an arbitration interframe space (AIFS) for each AC.

When the STA 2-2 and STA 3-2 perform transmissions based on the backoff counter values (e.g., the backoff counter values maintained at 0) from the previously completed backoff operations, a transmission collision may occur between the STA 2-2 and STA 3-2. To prevent the transmission collision, the STA 2-2 and STA 3-2 may perform new backoff operations (e.g., AC EDCAF backoff operations or EDCAF backoff operations). In other words, the backoff operations may be invoked again at the STA 2-2 and STA 3-2. A time at which the backoff operations are invoked may be after (e.g., immediately after) a time when the medium state transitions from the idle state to the busy state. Alternatively, the time at which the backoff operations are invoked may be after (e.g., immediately after) a time when the medium state transitions from the busy state to the idle state. Alternatively, the time at which the backoff operations are invoked may be after a predetermined time (e.g., predefined time) from a time when the medium state is detected as the busy state.

The invocation of the backoff operation may indicate performing an operation of selecting a backoff counter value and an operation of decrementing the backoff counter value based on a channel condition (e.g., idle state or busy state). Accordingly, the STA 2-2 and STA 3-2 may have new backoff counter value(s) for EDCAF(s). The STA 2-2 and STA 3-2 may select new backoff counter value(s) using the existing CW[AC] and/or QSRC[AC] of an EDCAF for each AC. In other words, to select new backoff counter value(s), the same CW[AC] and/or QSRC[AC] used in the previous backoff operation may be utilized. The CW[AC] and/or QSRC[AC] may be backoff parameter(s) (e.g., channel access parameter(s) or EDCA parameter(s)). In other words, the backoff parameter(s) (e.g., channel access parameter(s) or EDCA parameter(s)) may include CW[AC] and/or QSRC[AC]. The CW[AC] may refer to a CW for each AC. The QSRC[AC] may refer to a QSRC for each AC. The CW may refer to a contention window, and the QSRC may refer to a quality of service (QoS) short retry counter.

As another method, to select new backoff counter value(s), increased CW[AC] and/or increased QSRC[AC] may be used. For example, the CW[AC] of the EDCAF for each AC may be increased by a factor of n, and the QSRC[AC] of the EDCAF for each AC may be increased by m. Each of n and m may be a natural number. For example, n may be 2, and m may be 1. Each of the STA 2-2 and STA 3-2 may select a new backoff counter value using the increased CW[AC] and/or increased QSRC[AC]. Alternatively, to select new backoff counter value(s), decreased CW[AC] and/or decreased QSRC[AC] may be used. For example, the decreased CW[AC] may be 1/n of the existing CW[AC], and the decreased QSRC[AC] may be smaller by m than the existing QSRC[AC]. Each of n and m may be a natural number. For example, n may be 2, and m may be 1. Each of the STA 2-2 and STA 3-2 may select a new backoff counter value using the decreased CW[AC] and/or decreased QSRC[AC]. Alternatively, to select new backoff counter value(s), an initial value of CW[AC] and/or an initial value of QSRC[AC] may be used. Each of the initial value of CW[AC] and the initial value of QSRC[AC] may be a predefined value or a value indicated by each AP affiliated with the AP MLD.

Meanwhile, the STA 1-1 may perform a backoff operation after transmitting the frame. In other words, a backoff operation may be invoked at the STA 1-1 that has previously transmitted the frame. If the transmission of the previous frame is successful, the STA 1-1 may select a backoff counter value (e.g., new backoff counter value) using the initial value of CW[AC] and/or the initial value of QSRC[AC]. If the transmission of the previous frame fails, the STA 1-1 may select a backoff counter value (e.g., new backoff counter value) using the increased CW[AC] and/or increased QSRC[AC].

The STAs of the STA MLDs may perform backoff operations using the backoff counter values selected according to the EDCAF(s) for the respective ACs to acquire a TXOP (e.g., EDCA TXOP) on the second link. The STAs of the STA MLDs may transmit frames (e.g., data frames) within the TXOP on the second link.

In the exemplary embodiment of FIG. 3B, the STA 1-2, STA 2-2, and/or STA 3-2 may perform backoff operations on the second link. When the backoff operation is completed (e.g., the backoff operation is successful), the backoff counter value for the backoff operation may be 0. The backoff counter values of the STA 1-2, STA 2-2, and/or STA 3-2 may be maintained at 0 to perform multi-link synchronized transmission on the first link and the second link. While the backoff counter values are maintained at 0 on the second link, if another communication node transmits a frame, a medium state (e.g., channel state) of the second link may be detected as a busy state. The STA 1-2, STA 2-2, and/or STA 3-2 may fail to decode the frame transmitted by another communication node. In other words, the STA 1-2, STA 2, and/or STA 3-2 may detect an energy of the frame transmitted by another communication node but fail to decode a header of the frame.

When the backoff operation is successful on the first link, and the channel state of the second link is an idle state, multi-link synchronized transmission may be performed on the first link and the second link. When the backoff operation is successful on the first link, and the channel state of the second link is a busy state, multi-link synchronized transmission may not be performed on the first link and the second link. In this case, frame transmission may be performed on the first link, but frame transmission may not be performed on the second link.

When the channel state (e.g., medium state) of the second link transitions from the busy state to the idle state, the STA 1-2, STA 2-2, and/or STA 3-2 may wait for an extended interframe space (EIFS) for each AC. The EIFS for each AC may be defined as 'EIFS - distributed coordination function (DCF) interframe space (DIFS) + AIFS[AC]'. If the STA 1-2, STA 2-2, and/or STA 3-2 perform transmissions based on the backoff counter values (e.g., backoff counter values maintained at 0) according to the previous successful backoff operations, a transmission collision may occur among the STAs. Accordingly, the STA 1-2, STA 2-2, and/or STA 3-2 may perform new backoff operations (e.g., AC EDCAF backoff operations or EDCAF backoff operations). In other words, backoff operations may be invoked again at the STA 1-2, STA 2-2, and/or STA 3-2. A time at which the backoff operations are invoked may be after (e.g., immediately after) the medium state transitions from the idle state to the busy state. Alternatively, the time at which the backoff operations are invoked may be after (e.g., immediately after) the medium state transitions from the busy state to the idle state. Alternatively, the time at which the backoff operations are invoked may be after a predetermined time (e.g., preconfigured time) from a time when the medium state is detected as the busy state. Accordingly, the STA 1-2, STA 2-2, and/or STA 3-2 may have new backoff counter values for the EDCAF(s). The STA 1-2, STA 2-2, and/or STA 3-2 may select new backoff counter value(s) using the existing CW[AC] and/or QSRC[AC] of the EDCAF for each AC. In other words, to select new backoff counter value(s), the same CW[AC] and/or QSRC[AC] used in the previous backoff operations may be used.

As another method, to select new backoff counter value(s), increased CW[AC] and/or increased QSRC[AC] may be used. For example, the CW[AC] of the EDCAF for each AC may be increased by a factor of n, and the QSRC[AC] of the EDCAF for each AC may be increased by m. Each of n and m may be a natural number. For example, n may be 2, and m may be 1. Each of the STA 1-2, STA 2-2, and/or STA 3-2 may select a new backoff counter value using the increased CW[AC] and/or increased QSRC[AC]. Alternatively, to select new backoff counter value(s), decreased CW[AC] and/or decreased QSRC[AC] may be used. For example, the decreased CW[AC] may be 1/n of the existing CW[AC], and the decreased QSRC[AC] may be smaller by m than the existing QSRC[AC]. Each of n and m may be a natural number. For example, n may be 2, and m may be 1. Each of the STA 1-2, STA 2-2, and/or STA 3-2 may select a new backoff counter value using the decreased CW[AC] and/or decreased QSRC[AC]. Alternatively, to select new backoff counter value(s), an initial value of CW[AC] and/or an initial value of QSRC[AC] may be used. Each of the initial value of CW[AC] and the initial value of QSRC[AC] may be a predefined value or a value indicated by each AP affiliated with the AP MLD.

The STAs of the STA MLDs may perform backoff operations using the backoff counter values selected according to the EDCAF(s) for the respective ACs to acquire a TXOP (e.g., EDCA TXOP) on the second link. The STAs of the STA MLDs may transmit frames (e.g., data frames) within the TXOP on the second link.

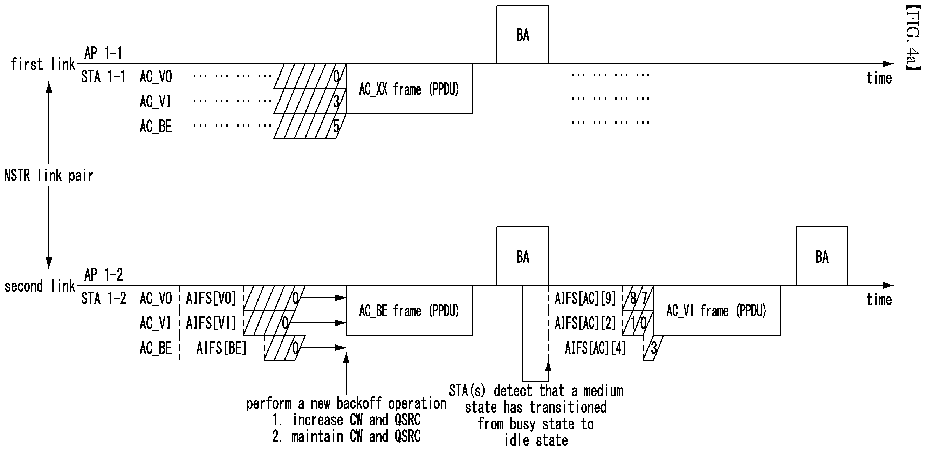

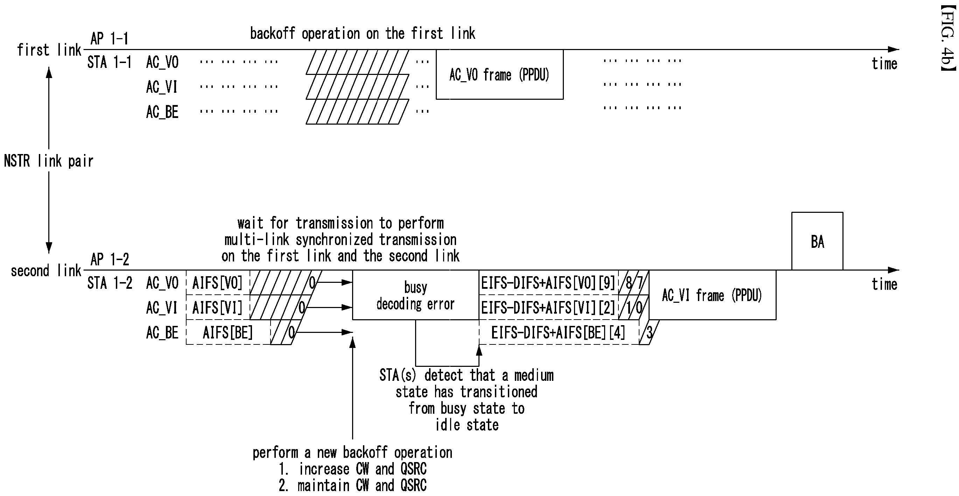

FIG. 4A is a timing diagram illustrating a third exemplary embodiment of a backoff operation method when multi-link synchronized transmission is not possible, and FIG. 4B is a timing diagram illustrating a fourth exemplary embodiment of a backoff operation method when multi-link synchronized transmission is not possible.

As shown in FIGS. 4A and 4B, an AP MLD 1 may operate on the first link and the second link. A STA affiliated with a STA MLD N operating on a link X may be referred to as a STA N-X. An AP affiliated with an AP MLD N operating on the link X may be referred to as an AP N-X. Each of X and N may be a natural number. A STA MLD 1 may operation on the first link and the second link. The first link and the second link may be an NSTR link pair for the STA MLD 1. An AP affiliated with the AP MLD 1 operating on the first link may be referred to as an AP 1-1, and an AP affiliated with the AP MLD 1 operating on the second link may be referred to as an AP 1-2. A STA affiliated with the STA MLD 1 operating on the first link may be referred to as a STA 1-1, and a STA affiliated with the STA MLD 1 operating on the second link may be referred to as a STA 1-2.

STAs affiliated with the STA MLD 1 may perform backoff operations to perform multi-link synchronized transmission on the first link and the second link. The multi-link synchronized transmission may mean that frames are transmitted at the same start time on multiple links. In multi-link synchronized transmission, differences between start times of the frames may be within a specific time (e.g., aRxTxTurnAroundTime). The aRxTxTurnAroundTime may be 4 µs. The backoff operation may refer to an EDCAF backoff operation for each AC. The backoff operation (e.g., AC EDCAF backoff operation) may start when an EDCA backoff is invoked. In other words, the backoff operation may be performed when an EDCA backoff is invoked. A backoff counter required for the backoff operation may be an EDCA backoff counter maintained by an EDCAF for each AC.

The STA 1-2 may perform a backoff operation for each AC on the second link, and the backoff operation for each AC may be completed. For multi-link synchronized transmission between the STA 1-1 and STA 1-2, the STA 1-2 may wait for the STA 1-1 to acquire a TXOP (e.g., EDCA TXOP) on the first link while maintaining a backoff counter value at 0 on the second link. The TXOP may be acquired at a slot (e.g., slot boundary) in which the EDCAF backoff counter of the STA reaches 0. The acquisition of the TXOP (e.g., EDCA TXOP) by the STA may mean acquisition of the TXOP (e.g., EDCA TXOP) by the EDCAF of each AC.

In the exemplary embodiment of FIG. 4A, the STA 1-1 of the STA MLD 1 may acquire a TXOP on the first link, and a frame (e.g., PPDU, MPDU, and/or A-MPDU) may be transmitted within the TXOP. When the STA 1-1 of the STA MLD 1 acquires the TXOP on the first link, the STA 1-2 may select an AC_XX (e.g., AC_BE) of one of EDCAFs with the backoff counter value maintained at 0, and perform multi-link synchronized transmission for a frame including data (e.g., data unit, packet) for the selected AC_BE. In other words, multi-link synchronized transmission for the frame of the STA 1-1 on the first link and the frame of the STA 1-2 on the second link may be performed. The frame including the data for AC_BE may be referred to as an AC_BE frame.

Although the backoff operations for AC_VO data (e.g., data for AC_VO) and AC_VI data (e.g., data for AC_VI) have been completed on the second link, transmission of the AC_VO data and AC_VI data may not be performed due to transmission of the AC_BE frame. In this case, after a medium state of the second link transitions from the busy state to the idle state, the STA may wait for an AIFS for each AC to perform data transmission. The length of the AIFS may vary by AC. Alternatively, the lengths of AIFSs for ACs may be the same. For example, the length of AIFS for AC_VO and the length of AIFS for AC_VI may be the same. Since the length of AIFS for AC_VO and the length of AIFS for AC_VI are the same, if the transmissions of AC_VO data and AC_VI data start while the backoff counter values are maintained at 0, frame transmissions may not be performed, and an internal collision may occur. If the internal collision occurs, backoff operations (e.g., EDCA backoff operations) for the AC_VO EDCAF and AC_VI EDCAF may be invoked again.

As another method, backoff operations for the EDCAFs of ACs with the same AIFS may be invoked while the backoff counter values are maintained at 0. A time at which the backoff operations are invoked may be after (e.g., immediately after) the medium state transitions from the idle state to the busy state. Alternatively, the time at which the backoff operations are invoked may be after (e.g., immediately after) the medium state transitions from the state busy to the idle state. Alternatively, the time at which the backoff operations are invoked may be after a predetermined time from a time when the medium state is detected as the busy state. Accordingly, the STA 1-2 may select new backoff value(s) for the AC_VO EDCAF and AC_VI EDCAF.

The STA 1-2 may select new backoff counter value(s) using the existing CW[AC] and/or QSRC[AC] of an EDCAF for each AC. In other words, to select new backoff counter value(s), the same CW[AC] and/or QSRC[AC] used in the previous backoff operation may be utilized. As another method, to select new backoff counter values, the STA 1-2 may use increased CW[AC] and/or increased QSRC[AC]. For example, the CW[AC] of the EDCAF for each AC may be increased by a factor of n, and the QSRC[AC] of the EDCAF for each AC may be increased by m. Each of n and m may be a natural number. For example, n may be 2, and m may be 1. The STA 1-2 may select a new backoff counter value using the increased CW[AC] and/or increased QSRC[AC].

Alternatively, to select new backoff counter value(s), decreased CW[AC] and/or decreased QSRC[AC] may be used. For example, the decreased CW[AC] may be 1/n of the existing CW[AC], and the decreased QSRC[AC] may be smaller by m than the existing QSRC[AC]. Each of n and m may be a natural number. For example, n may be 2, and m may be 1. The STA 1-2 may select a new backoff counter value using the decreased CW[AC] and/or decreased QSRC[AC]. Alternatively, to select new backoff counter value(s), an initial value of CW[AC] and/or an initial value of QSRC[AC] may be used. Each of the initial value of CW[AC] and the initial value of QSRC[AC] may be a predefined value or a value indicated by each AP affiliated with the AP MLD.

Meanwhile, the STA 1-1 may perform a backoff operation after transmitting the frame. In other words, a backoff operation for AC_BE may be invoked at the STA 1-1 that has previously transmitted the frame. If the transmission of the previous frame is successful, the STA 1-1 may select a backoff counter value for AC_BE (e.g., new backoff counter value) using the initial value of CW[AC] and/or the initial value of QSRC[AC]. If the transmission of the previous frame fails, the STA 1-1 may select a backoff counter value for AC_BE (e.g., new backoff counter value) using the increased CW[AC] and/or the increased QSRC[AC].

The STA 1-2 may perform backoff operations using the backoff counter values selected according to the EDCAF(s) for the respective ACs to acquire a TXOP (e.g., EDCA TXOP) on the second link. The STA 1-2 may transmit frames (e.g., data frames) within the TXOP on the second link.

In the exemplary embodiment of FIG. 4B, backoff operations for AC_BE EDCAF, AC_VO EDCAF, and AC_VI EDCAF of the STA 1-2 may be completed on the second link, and the backoff counter values for the backoff operations may be maintained at 0 in order to perform multi-link synchronized transmission on the first and second links. While the backoff counter values are maintained at 0 on the second link, if another communication node transmits a frame, a medium state (e.g., channel state) of the second link may be detected as a busy state. The STA 1-2 may fail to decode the frame transmitted by another communication node. In other words, the STA 1-2 may detect an energy of the frame transmitted by another communication node but fail to decode a header of the frame.

When the backoff operation on the first link is successful, and the channel state of the second link is an idle state, multi-link synchronized transmission may be performed on the first and second links. When the backoff operation on the first link is successful, and the channel state of the second link is a busy state, multi-link synchronized transmission may not be performed on the first and second links. In this case, frame transmission on the first link may be performed, and frame transmission on the second link may not be performed.

When the channel state (e.g., medium state) of the second link transitions from the busy state to an idle state, the STA 1-2 may wait for an EIFS for each AC. The EIFS for each AC may be 'EIFS - DIFS + AIFS[AC]'. If the STA 1-2 performs transmissions based on the backoff counter values (e.g., the backoff counter values maintained at 0) of the previously successful backoff operations, a transmission collision (e.g., internal collision) may occur. If the internal collision occurs, frames may not be transmitted. Therefore, the STA 1-2 may perform new backoff operations for AC_BE EDCAF, AC_VO EDCAF, and AC_VI EDCAF. In other words, backoff operations for AC_BE EDCAF, AC_VO EDCAF, and AC_VI EDCAF may be invoked again at the STA 1-2. A time at which the backoff operations are invoked may be immediately after a time when the medium state transitions from the idle state to the busy state. Alternatively, the time at which the backoff operations are invoked may be immediately after a time when the medium state transitions from the busy state to the idle state. Alternatively, the time at which the backoff operations are invoked may be after a predetermined time form a time when the medium state is detected as the busy state. Accordingly, the STA 1-2 may have new backoff counter value(s) for the EDCAF(s).

The STA 1-2 may select new backoff counter value(s) using the existing CW[AC] and/or QSRC[AC] of an EDCAF for each AC. In other words, to select new backoff counter value(s), the same CW[AC] and/or QSRC[AC] used in the previous backoff operation may be utilized. As another method, to select new backoff counter value(s), the STA 1-2 may use increased CW[AC] and/or increased QSRC[AC]. For example, the CW[AC] of the EDCAF for each AC may be increased by a factor of n, and the QSRC[AC] of the EDCAF for each AC may be increased by m. Each of n and m may be a natural number. For example, n may be 2, and m may be 1. The STA 1-2 may select a new backoff counter value using the increased CW[AC] and/or increased QSRC[AC].

Alternatively, to select new backoff counter value(s), decreased CW[AC] and/or decreased QSRC[AC] may be used. For example, the decreased CW[AC] may be 1/n of the existing CW[AC], and the decreased QSRC[AC] may be smaller by m than the existing QSRC[AC]. Each of n and m may be a natural number. For example, n may be 2, and m may be 1. The STA 1-2 may select a new backoff counter value using the decreased CW[AC] and/or decreased QSRC[AC]. Alternatively, to select new backoff counter value(s), an initial value of CW[AC] and/or an initial value of QSRC[AC] may be used. Each of the initial value of CW[AC] and the initial value of QSRC[AC] may be a predefined value or a value indicated by each AP affiliated with the AP MLD.

The STA 1-2 may perform backoff operations using the backoff counter values selected according to the EDCAF(s) for the respective ACs to acquire a TXOP (e.g., EDCA TXOP) on the second link. The STA 1-2 may transmit frames (e.g., data frames) within the TXOP on the second link.

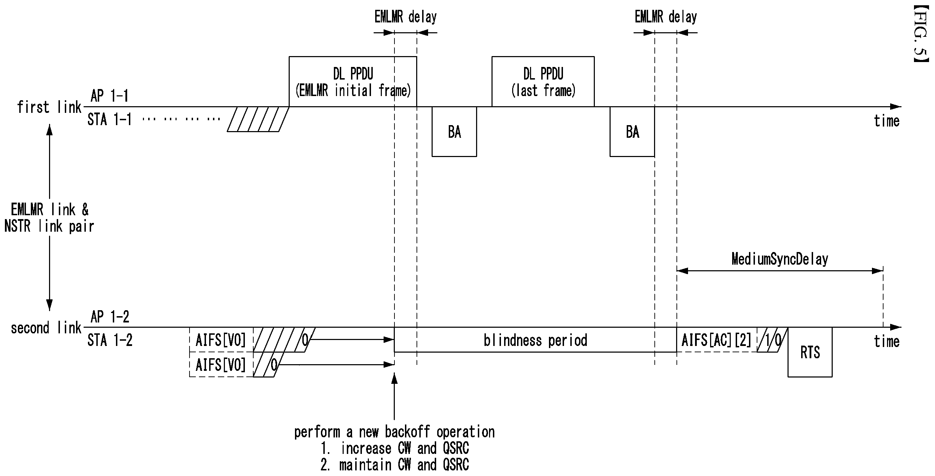

FIG. 5 is a timing diagram illustrating a fifth exemplary embodiment of a backoff operation method when multi-link synchronized transmission is not possible.

As shown in FIG. 5, an AP MLD 1 may operate on the first link and the second link. A STA affiliated with a STA MLD N operating on a link X may be referred to as a STA N-X. An AP affiliated with an AP MLD N operating on the link X may be referred to as an AP N-X. Each of X and N may be a natural number. A STA MLD 1 may operation on the first link and the second link. The first link and the second link may be an NSTR link pair for the STA MLD 1. An AP affiliated with the AP MLD 1 operating on the first link may be referred to as an AP 1-1, and an AP affiliated with the AP MLD 1 operating on the second link may be referred to as an AP 1-2. A STA affiliated with the STA MLD 1 operating on the first link may be referred to as a STA 1-1, and a STA affiliated with the STA MLD 1 operating on the second link may be referred to as a STA 1-2.

The first and second links may be enhanced multi-link multi-radio (EMLMR) links for the STA MLD 1. For example, the AP MLD 1 and STA MLD 1 may perform a negotiation procedure of EMLMR operation on one link among the first link and the second link. Once the negotiation procedure for EMLMR operation is completed, the EMLMR operation may be performed on both the first and second links.

STAs affiliated with the STA MLD 1 may perform backoff operations to perform multi-link synchronized transmission on the first and second links. The backoff operation may refer to an EDCAF backoff operation for each AC. The backoff operation (e.g., AC EDCAF backoff operation) may start when an EDCA backoff is invoked. In other words, the backoff operation may be performed when an EDCA backoff is invoked. A backoff counter required for the backoff operation may be a backoff counter maintained by the EDCAF for each AC (e.g., EDCA backoff counter).

The STA 1-2 may successfully perform the backoff operations on the second link, and if the backoff operations are successful, the backoff counter values may be 0. For multi-link synchronized transmission involving the STA 1-1 and STA 1-2, the STA 1-2 may maintain the backoff counter values at 0 on the second link (e.g., backoff counter values for AC_VO EDCAF and AC_VI EDCAF) while waiting for the STA 1-1 to acquire a TXOP (e.g., EDCA TXOP) on the first link. The TXOP may be acquired at a slot (e.g., slot boundary) in which the EDCAF backoff counter of the STA reaches 0. The acquisition of the TXOP (e.g., EDCA TXOP) by the STA may mean acquisition of the TXOP (e.g., EDCA TXOP) by the EDCAF for each AC.

The STA 1-1 of the STA MLD 1 may receive an initial frame from the AP 1-1 before acquiring the TXOP on the first link. The initial frame may be an EMLMR initial frame. The initial frame may be an initial control frame. When the initial frame is received on the first link, the STA 1-2 of the STA MLD 1 may switch its RF chain(s) to the first link (e.g., the STA 1-1 operating on the first link). In the present disclosure, the RF chain may correspond to a spatial stream. When the RF chain(s) of the STA 1-2 are switched to the first link, a blindness period may occur on the second link. The blindness period on the second link may end after an EMLMR delay from an end time of communication between the STA 1-1 and AP 1-1 on the first link. Alternatively, the blindness period on the second link may end after 'aSIFSTime + aSlotTime + aRxPHYStartDelay + EMLMR delay' from the end time of communication between the STA 1-1 and AP 1-1 on the first link. If the blindness period exceeds 72 µs, a MediumSyncDelay timer may occur on the second link. In other words, the MediumSyncDelay timer may start on the second link. A length of the MediumSyncDelay timer (e.g., a time corresponding to the MediumSyncDelay timer) may be aPPDUMaxTime. The aPPDUMaxTime may be a predefined maximum length of a PPDU. During the time corresponding to the MediumSyncDelay timer, a channel detection operation and/or a frame transmission operation initiated by a request-to-send (RTS) frame may be performed. Since the channel detection operation is possible during the time corresponding to the MediumSyncDelay timer, an EDCAF backoff operation may also be performed.

After the blindness period ends on the second link and the medium state of the second link transitions from the busy state to the idle state, the STA may wait for an AIFS for each AC to transmit data (e.g., AC_VO data and/or AC_VI data). The length of the AIFS may vary depending on the AC. Alternatively, the lengths of the AIFSs for the ACs may be the same. For example, the length of AIFS for AC_VO and the length of AIFS for AC_VI may be the same. Since the lengths of the AIFSs for AC_VO and AC_VI are the same, if transmissions of AC_VO data and AC_VI data start while the backoff counter values are maintained at 0, a transmission collision may occur. When the transmission collision occur, new backoff operations (e.g., EDCA backoff operations) for AC_VO EDCAF and AC_VI EDCAF may be invoked.

A time at which the backoff operations are invoked may be immediately after a time when the blindness period occurs on the second link. Alternatively, the time at which the backoff operations are invoked may be after (e.g., immediately after) an end time of the blindness period on the second link. Alternatively, the time at which the backoff operations are invoked may be after a predetermined time (e.g., preconfigured time) from the when the blindness period occurs on the second link. Accordingly, the STA 1-2 may select new backoff values for AC_VO EDCAF and AC_VI EDCAF.

The STA 1-2 may select new backoff counter value(s) using the existing CW[AC] and/or QSRC[AC] of an EDCAF for each AC. In other words, to select new backoff counter value(s), the same CW[AC] and/or QSRC[AC] used in the previous backoff operation may be utilized. As another method, to select new backoff counter value(s), the STA 1-2 may use increased CW[AC] and/or increased QSRC[AC]. For example, the CW[AC] of the EDCAF for each AC may be increased by a factor of n, and the QSRC[AC] of the EDCAF for each AC may be increased by m. Each of n and m may be a natural number. For example, n may be 2, and m may be 1. The STA 1-2 may select a new backoff counter value using the increased CW[AC] and/or increased QSRC[AC].

Alternatively, to select new backoff counter value(s), decreased CW[AC] and/or decreased QSRC[AC] may be used. For example, the decreased CW[AC] may be 1/n of the existing CW[AC], and the decreased QSRC[AC] may be smaller by m than the existing QSRC[AC]. Each of n and m may be a natural number. For example, n may be 2, and m may be 1. The STA 1-2 may select a new backoff counter value using the decreased CW[AC] and/or decreased QSRC[AC]. Alternatively, to select new backoff counter value(s), an initial value of CW[AC] and/or an initial value of QSRC[AC] may be used. Each of the initial value of CW[AC] and the initial value of QSRC[AC] may be a predefined value or a value indicated by each AP affiliated with the AP MLD.

The STA 1-2 may perform backoff operations using the backoff counter values selected according to the EDCAF(s) for the respective ACs to acquire a TXOP (e.g., EDCA TXOP) on the second link. The STA 1-2 may transmit frames (e.g., data frames) within the TXOP on the second link. For example, the STA 1-2 may transmit an RTS frame first within the TXOP on the second link, and after transmitting the RTS frame within the TXOP on the second link, the STA 1-2 may transmit data frame(s). In other words, if the MediumSyncDelay timer of the STA 1-2 does not expire, a frame transmitted first within the TXOP on the second link may be the RTS frame.

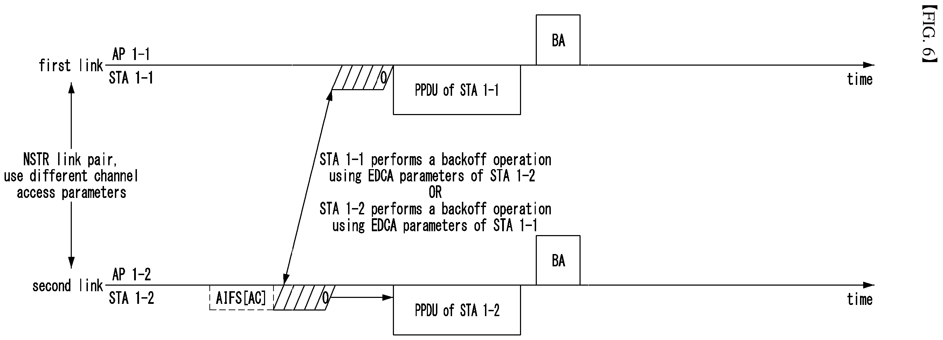

FIG. 6 is a timing diagram illustrating a first exemplary embodiment of a method for determining parameters for channel access operations in multi-link synchronized transmission.

As shown in FIG. 6, an AP MLD 1 may operate on the first link and the second link. A STA affiliated with a STA MLD N operating on a link X may be referred to as a STA N-X. An AP affiliated with an AP MLD N operating on the link X may be referred to as an AP N-X. Each of X and N may be a natural number. A STA MLD 1 may operation on the first link and the second link. The first link and the second link may be an NSTR link pair for the STA MLD 1. An AP affiliated with the AP MLD 1 operating on the first link may be referred to as an AP 1-1, and an AP affiliated with the AP MLD 1 operating on the second link may be referred to as an AP 1-2. A STA affiliated with the STA MLD 1 operating on the first link may be referred to as a STA 1-1, and a STA affiliated with the STA MLD 1 operating on the second link may be referred to as a STA 1-2.

STAs affiliated with the STA MLD 1 may perform backoff operations to perform multi-link synchronized transmission on the first and second links. The backoff operation may refer to an EDCAF backoff operation for each AC. The backoff operation (e.g., AC EDCAF backoff operation) may start when an EDCA backoff is invoked. In other words, the backoff operation may be performed when an EDCA backoff is invoked. A backoff counter required for the backoff operation may be a backoff counter maintained by the EDCAF for each AC (e.g., EDCA backoff counter)

The STA 1-2 may successfully perform the backoff operation on the second link, and if the backoff operation is successful, the backoff counter value may be 0. For multi-link synchronized transmission involving the STA 1-1 and STA 1-2, the STA 1-2 may maintain the backoff counter value at 0 on the second link while waiting for the STA 1-1 to acquire a TXOP (e.g., EDCA TXOP) on the first link. The TXOP may be acquired at a slot (e.g., slot boundary) in which the EDCAF backoff counter of the STA reaches 0. The acquisition of the TXOP (e.g., EDCA TXOP) by the STA may mean acquisition of the TXOP (e.g., EDCA TXOP) by the EDCAF for each AC.

EDCA parameters (e.g., channel access parameters, backoff parameters) for the respective links may differ. For example, the (default) EDCA parameters configured for the first link may differ from the (default) EDCA parameters configured for the second link. During a specific period (e.g., restricted target wake time (rTWT) service period (SP)), EDCA parameters may be modified, and they may vary depending on the link.

If the EDCA parameters of the second link differ from the EDCA parameters of the first link, the STA MLD 1 may perform a backoff operation on the first link (e.g., backoff operation of the STA 1-1) and a backoff operation on the second link (e.g., backoff operation of the STA 1-2) using the EDCA parameters of the second link (e.g., EDCA parameters applied to the STA 1-2 operating on the second link) to perform multi-link synchronized transmission on the first and second links. Alternatively, the STA MLD 1 may perform a backoff operation on the first link (e.g., backoff operation of the STA 1-1) and a backoff operation of the second link (e.g., backoff operation of the STA 1-2) using the EDCA parameters of the first link (e.g., EDCA parameters applied to the STA 1-1 operating on the first link). In other words, for multi-link synchronized transmission, backoff operations on multiple links (e.g., the first and second links) may be performed using the same EDCA parameters. The STA 1-1 and STA 1-2 may perform multi-link synchronized transmission and may transmit frames within the TXOP (e.g., EDCA TXOP).

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a station (STA) multi-link device (MLD), comprising:
performing a first backoff operation on a first link;
in response to completion of the first backoff operation, maintaining a backoff counter value for the first backoff operation at 0 for multi-link synchronized transmission on the first link and a second link;
performing a second backoff operation on the second link; and
in response to completion of the second backoff operation, performing the multi-link synchronized transmission on the first link and the second link,
wherein when the multi-link synchronized transmission is performed, a transmission start time of a first frame on the first link is equal to a transmission start time of a second frame on the second link.

2. The method according to claim 1, wherein when the second backoff operation is completed and a channel state of the first link is an idle state, the multi-link synchronized transmission is performed, and when the second backoff operation is completed and the channel state of the first link is a busy state, the multi-link synchronized transmission is not performed.

3. The method according to claim 1, wherein the STA MLD is a non-simultaneous transmit and receive (NSTR) STA MLD that is not capable of STR operations, and the first link and the second link are NSTR links.

4. The method according to claim 1, wherein when first channel access parameters configured for the first backoff operation are different from second channel access parameters configured for the second backoff operation, the first backoff operation and the second backoff operation for the multi-link synchronized transmission are performed using same channel access parameters, the same channel access parameters are the first channel access parameters or the second channel access parameters, and the same channel access parameters include at least one of a contention window (CW) per access category (AC) or a quality of service (QoS) short retry counter (QSRC) per AC.

5. The method according to claim 1, wherein when the first backoff operation for each of a plurality of data units having different ACs is completed on the first link, the multi-link synchronized transmission for a first data unit among the plurality of data units is performed.

6. The method according to claim 5, further comprising:
performing a third backoff operation for a second data unit among the plurality of data units on the first link; and
in response to the third backoff operation being successful, transmitting the second data unit on the first link.

7. The method according to claim 6, wherein the third backoff operation is performed after a time when a channel state of the first link transitions from an idle state to a busy state, after a time when the channel state of the first link transitions from a busy state to an idle state, or after a predefined time from a time when the channel state of the first link is detected as a busy state.

8. The method according to claim 6, wherein first channel access parameters used for the first backoff operation on the first link are equal to third channel access parameters used for the third backoff operation on the first link.

9. The method according to claim 6, wherein first channel access parameters used for the first backoff operation on the first link are different from third channel access parameters used for the third backoff operation on the first link, and a CW among the third backoff parameters is an n-multiple or 1/n of a CW among the first backoff parameters, n being a natural number.

10. The method according to claim 6, wherein first channel access parameters used for the first backoff operation on the first link are different from third channel access parameters used for the third backoff operation on the first link, and a QSRC among the third backoff parameters is greater or smaller than a QSRC among the first backoff parameters by m, m being a natural number.

11. A station (STA) multi-link device (MLD) comprising at least one processor, wherein the at least one processor causes the STA MLD to perform:
performing a first backoff operation on a first link;
in response to completion of the first backoff operation, maintaining a backoff counter value for the first backoff operation at 0 for multi-link synchronized transmission on the first link and a second link;
performing a second backoff operation on the second link; and
in response to completion of the second backoff operation, performing the multi-link synchronized transmission on the first link and the second link,
wherein when the multi-link synchronized transmission is performed, a transmission start time of a first frame on the first link is equal to a transmission start time of a second frame on the second link.

12. The STA MLD according to claim 11, wherein when the second backoff operation is completed and a channel state of the first link is an idle state, the multi-link synchronized transmission is performed, and when the second backoff operation is completed and the channel state of the first link is a busy state, the multi-link synchronized transmission is not performed.

13. The STA MLD according to claim 11, wherein the STA MLD is a non-simultaneous transmit and receive (NSTR) STA MLD that is not capable of STR operations, and the first link and the second link are NSTR links.

14. The STA MLD according to claim 11, wherein when first channel access parameters configured for the first backoff operation are different from second channel access parameters configured for the second backoff operation, the first backoff operation and the second backoff operation for the multi-link synchronized transmission are performed using same channel access parameters, the same channel access parameters are the first channel access parameters or the second channel access parameters, and the same channel access parameters include at least one of a contention window (CW) per access category (AC) or a quality of service (QoS) short retry counter (QSRC) per AC.

15. The STA MLD according to claim 11, wherein when the first backoff operation for each of a plurality of data units having different ACs is completed on the first link, the multi-link synchronized transmission for a first data unit among the plurality of data units is performed.

16. The STA MLD according to claim 15, wherein the at least one processor further causes the STA MLD to perform:
performing a third backoff operation for a second data unit among the plurality of data units on the first link; and
in response to the third backoff operation being successful, transmitting the second data unit on the first link.

17. The STA MLD according to claim 16, wherein the third backoff operation is performed after a time when a channel state of the first link transitions from an idle state to a busy state, after a time when the channel state of the first link transitions from a busy state to an idle state, or after a predefined time from a time when the channel state of the first link is detected as a busy state.

18. The STA MLD according to claim 16, wherein first channel access parameters used for the first backoff operation on the first link are equal to third channel access parameters used for the third backoff operation on the first link.

19. The STA MLD according to claim 16, wherein first channel access parameters used for the first backoff operation on the first link are different from third channel access parameters used for the third backoff operation on the first link, and a CW among the third backoff parameters is an n-multiple or 1/n of a CW among the first backoff parameters, n being a natural number.

20. The STA MLD according to claim 16, wherein first channel access parameters used for the first backoff operation on the first link are different from third channel access parameters used for the third backoff operation on the first link, and a QSRC among the third backoff parameters is greater or smaller than a QSRC among the first backoff parameters by m, m being a natural number.
